# EUROPEAN PATENT SPECIFICATION

(11) **EP 3 137 779 B1**
(45) Date of publication and mention of the grant of the patent: **27.11.2019**
(21) Application number: 15717980.5
(22) Date of filing: 31.03.2015
(51) Int. Cl.: F16D 1/08, F16D 7/02, F16D 43/286

(54) **PRESSURE LIMITING DEVICE**
DRUCKBEGRENZUNGSVORRICHTUNG
DISPOSITIF DE LIMITATION DE PRESSION

(30) Priority: 30.04.2014 SE 1450515
(43) Date of publication of application: 08.03.2017
(73) Proprietor: Voith Patent GmbH, 89522 Heidenheim (DE)
(72) Inventor: FORS, Daniel, S-825 92 Njutånger (SE); BERTILSSON HJELM, Bo, S-820 70 Bergsjö (SE)
(86) International application number: PCT/SE2015/050400
(87) International publication number: WO 2015/167386

(56) References cited:
- WO-A1-2014/043726
- DE-A1- 10 053 586
- DE-A1- 10 112 088
- DE-A1-102011 015 631
- GB-A- 994 818
- GB-A- 2 206 181
- US-A- 2 436 947

## Description

### Field of the invention

The present invention relates to a torque-limiting safety coupling having a pressurisation device for filling and pressurisation of fluid in enclosed spaces. Disclosed herein is also an apparatus comprising an enclosed space adapted to receive a pressurised fluid and such a pressurisation device and a method of filling and pressurisation of fluid in an enclosed space.

### Technical background

There exist a number of industrial applications today relying on enclosing a fluid under pressure in an enclosed space. One example of such industrial applications includes hydraulic safety couplings for torque-transmitting shafts, e.g. DE 40 28 158 and WO 2013/002722. Another example of a hydraulic safety coupling is for example also shown in US 2,436,947 A. The basic principle of operation for such safety couplings is to arrange two coupling parts coaxially with respect to each other and with an expandable chamber in the form of a circumferential gap arranged in one of the coupling parts. The gap is then filled with a fluid such as oil under pressure and enclosed such that the coupling part expands in order to create a frictional coupling with the other coupling part. The fluid pressure in the gap is maintained in order to ensure torque transmission between the shafts.

However, when the torque exceeds a threshold value, the fluid pressure in the gap is released by means of a safety mechanism to disengage the frictional coupling between the coupling parts. This is to protect the torque transmitting shaft from damage when the torque increases beyond the predetermined operating range. As may be understood, ensuring that the correct fluid pressure is achieved is vital to prevent malfunction of the safety coupling which otherwise may cause serious damage to the torque-transmitting shafts.

Usually, manual or compressed air pumps are used to pump the fluid into the gap. Both these types of pumps give a pulsating fluid flow into the gap. The fluid is pumped into the gap until the desired pressure is achieved, whereupon the pumping is stopped and the valve controlling access to the gap is closed manually. Although specific recommended values for the enclosed fluid pressure are provided, it has been found that operators often exceed these recommended values when filling the gap.

To avoid exceeding the recommended fluid pressure, a pressure relief valve may be provided which opens when the fluid pressure in the gap exceeds the set pressure of the valve. Thus, the desired fluid pressure in the enclosed space may be controlled with the relief valve when filling the gap. One drawback with such pressure relief valves is that although the opening pressure is very accurate, the closing or reseating pressure, i.e. the pressure when the pressure relief valve recloses after opening, is very difficult to control. As a result, the final enclosed fluid pressure may vary considerably between the moment when the pressure relief valve opens and the moment when the relief valve closes again. Such uncertainty and lack of control of the fluid pressure is highly undesirable in applications where high precision and accuracy is required.

Hence, there is a need to developed improved devices and methods for ensuring that the correct fluid pressure is achieved in pressurisation of enclosed spaces, such as e.g. expandable chambers in torque-limiting safety couplings.

### Summary of the invention

The object of the present invention is to provide an improved torque-limiting safety coupling devices for ensuring that the correct fluid pressure is achieved in pressurisation of enclosed spaces.

This is achieved by a torque-limiting safety coupling according to claim 1, comprising a circumferential expandable chamber adapted to receive a pressurised fluid and comprising a fluid pressurisation device for filling and pressurisation of fluid in an enclosed space at a predetermined pressure, wherein the circumferential expandable chamber constitutes the enclosed space and the pressurisation device comprises a pump connection seat arranged in fluid communication with the enclosed space and adapted to removably receive a nozzle of a fluid pump therein; a unidirectional check valve arranged between the pump connection seat and the enclosed space and configured to allow flow of fluid from the pump connection seat to the enclosed space; and a pressure-limiting valve having an inlet arranged in fluid communication with the pump connection seat and configured to open at the predetermined pressure and to drain fluid from the pump connection seat through the pressure limiting valve and at the same time the pressure applied to the check valve (4) decreases due to the draining off of the fluid through the pressure limiting valve, whereby the check valve immediately closes to enclose the fluid in the enclosed space at the predetermined pressure and whereby the torque-limiting safety coupling further comprises a channel having a frist end and a second end, the first end being connected to the pump connection seat and the second end being connected to the inlet of the pressure limiting valve.

By providing a check valve in combination with a pressure-limiting valve, wherein the check valve is arranged between the enclosed space and the pump connection seat, it is possible to control the fluid pressure of the fluid enclosed in the enclosed space with improved accuracy. As fluid is pumped into the enclosed space through the check valve, the pressure-limiting valve remains closed, allowing the build-up of fluid pressure. Since the pressure-limiting valve is also arranged in fluid communication with the pump connection seat, the fluid pressure built up in the enclosed space is substantially equal to the pressure applied to the pressure-limiting valve. The pressure-limiting valve is configured to open at a predetermined pressure. When the fluid pressure reaches this predetermined pressure, the pressure-limiting valve opens and drains fluid from the pump connection seat. At the same time, the pressure now applied to the check valve is decreased due to the draining off of the fluid through the pressure-limiting valve. Consequently, the check valve immediately closes to enclose the pressurised fluid in the enclosed space at a fluid pressure substantially equal to the predetermined pressure.

Disclosed herein is also a pressurisation device that is adapted to be releasably mounted on an apparatus containing the enclosed space. By providing a releasable attachment of the pressurisation device to the apparatus, all sorts of industrial applications comprising enclosed spaces to be pressurised may be retrofitted to improve control and accuracy of the fluid filling process.

In an alternative embodiment, the pump connection seat, the check valve and the pressure-limiting valve are arranged in and form part of an apparatus containing the enclosed space. By integrally forming the pressurisation device with the apparatus containing the enclosed space, it is possible to adapt the device to the specific industrial application ensuring compact design which does not substantially protrude from the exterior surface of the apparatus.

In a further preferred embodiment, the pressure-limiting valve is connected with the check valve and configured to send a closing signal to the check valve when the pressure-limiting valve is opened. The sending of the closing signal ensures that the check valve closes immediately upon opening of the pressure-limiting valve to further improve the accuracy of the pressurisation device.

In a further preferred embodiment, the pressure-limiting valve comprises a housing and a coil spring mounted on an adjustment screw for adjusting the predetermined pressure. By providing means for adjusting the predetermined pressure, the device may be adapted to the specific industrial application on site.

In an advantageous embodiment, the pump connection seat comprises attachment means for releasably securing a nozzle of the fluid pump therein. Hence, the fluid pump nozzle may be securely held in place in the pump connection seat during the filling process. The pump connection seat may be a recess or groove machined in the apparatus and adapted to receive fluid from the fluid pump nozzle.

Disclosed herein is also an apparatus comprising an enclosed space to be filled with a pressurised fluid and a pressurisation device.

Preferably, the predetermined pressure corresponds to a predetermined torque threshold value at which a safety mechanism for evacuating the expandable chamber is activated to release the safety coupling. Since safety couplings are highly dependent on the accuracy of the fluid pressure, the improved control and accuracy provided by the pressurisation device facilitates filling of the circumferential gap of the expandable chamber.

Disclosed herein is also a method of filling and pressurisation of fluid in an enclosed space at a predetermined pressure comprising the steps: providing a pump connection seat arranged in fluid communication with the enclosed space and adapted to receive a nozzle of a fluid pump therein; providing a unidirectional check valve arranged between the pump connection seat and the enclosed space and configured to allow flow of fluid from the pump connection seat to the enclosed space; providing a pressure-limiting valve arranged in fluid communication with the pump connection seat and configured to open at the predetermined pressure; and filling the enclosed space with fluid from the fluid pump until the predetermined pressure is reached to open the pressure-limiting device, whereby the check valve immediately closes to enclose the fluid in the enclosed space at the predetermined pressure.

### Brief description of the drawings

Fig. 1 shows a cross-sectional view of a pressurisation device according to the present invention; and
Fig. 2 shows in a schematic view a pressure-limiting valve used in the present invention.

### Detailed description of the invention

Below, the pressurisation device will be described more in detail, reference being made to the figures. However, the invention should not be considered limited to the embodiment or embodiments shown in the figures and described below, but may be varied within the scope of the claims.

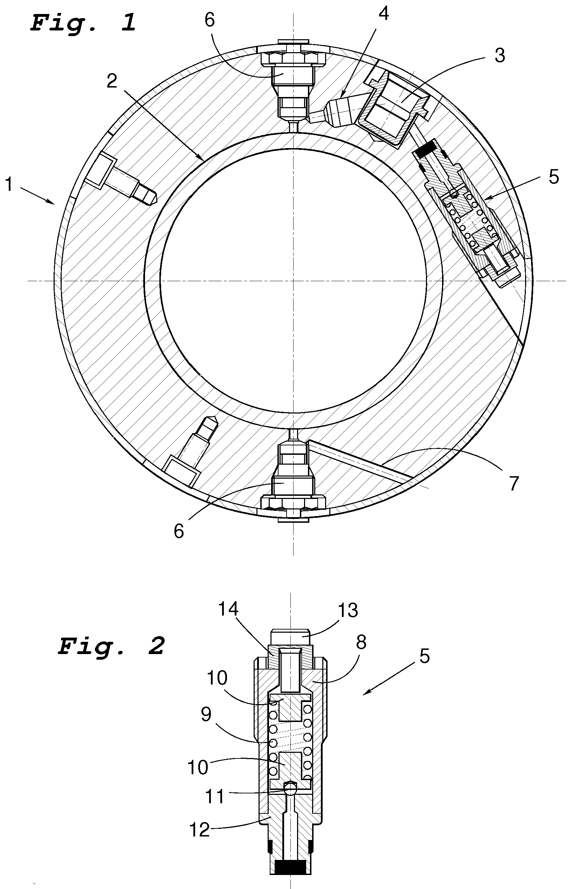

In Fig. 1, there is shown a cross-sectional view of the filling and pressurisation device according to the present invention. Here, the pressurisation device is shown integrally formed with a safety coupling 1 for torque-transmitting shafts as explained above. In an alternative embodiment, the pressurisation device may be provided as a stand-alone apparatus adapted to be releasably attached to the safety coupling 1. The safety coupling 1 comprises an expandable chamber in the form of a circumferential gap 2 adapted to be filled with a fluid such as hydraulic oil. The circumferential gap 2 constitutes an enclosed space in accordance with the present invention and this term will be used when referring to the drawings. It is however understood that an enclosed space comprises other alternatives than a circumferential gap 2 and should therefore not be construed as limited to the latter. When the gap 2 is filled the expandable chamber expands to create a frictional coupling with a coaxial second coupling part (not shown). The safety coupling 1 comprises at least one valve as part of a safety mechanism to evacuate the gap 2 and release the frictional coupling if a torque threshold value is exceeded.

The pressurisation device comprises a pump connection seat 3 which is arranged in fluid communication with the circumferential gap 2 of the safety coupling 1. In the case of the integrally formed pressurisation device, the pump connection seat 3 may be machined in the exterior surface of the safety coupling 1 such that it does not protrude therefrom. In this way, a compact arrangement of the pressurisation device with the safety coupling 1 is achieved which does not interfere with the rotational motion of the safety coupling 1 as the torque-transmitting shafts rotate.

The pump connection seat 3 is adapted to receive the nozzle of a fluid pump therein when the fluid pump is connected to the safety coupling 1 before start of the filling procedure. In other words, the filling and pressurisation device according to the present invention is a stand-alone device separate from the fluid pump. The fluid pump is only connected during the filling procedure since the purpose of the present invention is to ensure that a fluid is enclosed in an enclosed space, such as the circumferential gap 2 of the safety coupling 1, at a predetermined pressure. Subsequent refilling of the gap 2 may be carried out after release of the safety coupling 1.

Between the pump connection seat 3 and the gap 2 a unidirectional check valve 4 is arranged and configured such that fluid flow is allowed in a direction from the pump connection seat 3 to the gap 2 and blocked in the opposite direction. Normally, a certain pressure is required to open the check valve 4 and allow fluid to pass there through. As soon as the pressure applied to the check valve 4 decreases below the set pressure the check valve 4 closes. Also, when the fluid pressure downstream of the check valve 4 is higher than the fluid pressure upstream of the check valve 4, the check valve 4 will close automatically. Check valves are known in the art and will not be explained in further detail here.

In addition to the check valve 4, there is arranged a pressure-limiting valve 5, also known as a pressure relief valve, having an inlet in fluid communication with the pump connection seat 3. The pressure-limiting valve 5 is configured to open at a predetermined set pressure. In Fig. 2, there is shown a schematic cross-sectional view of an exemplary pressure-limiting valve 5 to be used in the pressurisation device according to the present invention. The pressure-limiting valve 5 comprises a valve body 8 enclosing a spring 9 held in place by spring holders 10. The spring 9 bears on a ball 11 to close the opening of a valve seat 12 to which the valve body 8 is fastened. In operation the force of the spring 9 will keep the ball 11 pressed against the valve seat 12 such that the pressure-limiting valve 5 remains closed. When the pressure exerted on the ball 11 by the fluid entering the valve seat 12 overcomes the spring force, fluid will pass through the valve seat 12 to an outlet (not shown) of the pressure-limiting valve 5. The outlet of the pressure-limiting valve 5 drains towards the outside of the safety coupling 1. The spring force and thus, the predetermined set pressure, may be adjusted by means of an adjustment screw 13 and a suitable number of spacers 14.

In order to fill the gap 2 of the safety coupling 1 with fluid, a nozzle of a suitable pump, such as a manual or compressed air pump, is attached to the pump connection seat 3. The pump connection seat 3 has attachment means such as a snap-fit connection to secure the nozzle in place during the pumping process. As fluid is pumped the check valve 4 will open to allow passage of fluid into the gap 2. At the same time, the pressure-limiting valve 5 remains closed. The fluid pressure experienced at the inlet of the pressure-limiting valve 5 is substantially the same as the fluid pressure applied to the check valve 4. When the fluid pressure in the gap 2 starts to build up and reaches the predetermined set pressure of the pressure-limiting valve 5, the pressure-limiting valve 5 opens as explained above.

Consequently, the fluid pressure in the pump connection seat 3 drops as fluid is now drained off through the pressure-limiting valve 5. Simultaneously, the check valve 4 immediately closes since the fluid pressure in the gap 2 downstream of the check valve 4 now exceeds the fluid pressure in the pump connection seat 3 upstream of the check valve 4. As a result, the fluid pressure in the gap 2, substantially corresponding to the predetermined set pressure of the pressure-limiting valve 5, is enclosed. After opening of the pressure-limiting valve 5, the pumping process is halted and the pump nozzle removed from the pump connection seat 3. Thereafter, the safety coupling 1 is ready for normal operation with the desired fluid pressure enclosed in the circumferential gap 2.

The safety coupling 1 is further provided with additional valves 6 and a draining outlet 7 in order to evacuate the gap 2 when it is required to lower the pressure in the gap 2. Also, a safety mechanism may be incorporated into the safety coupling 1 for rapidly releasing the frictional coupling when the torque transmitted between the shafts exceeds a torque threshold value. Such a safety mechanism is known e.g. from WO 2005/061916 or WO 2013/002722. The safety mechanism may include an arrangement for opening the valves 6 by shearing off the top lid when the torque-transmitting shafts are displaced in relation to each other as a result of the excessive torque.

In order to further improve the accuracy of the pressurisation device, the pressure-limiting valve 5 and the check valve 4 may be connected to each other. The pressure-limiting valve 5 is then configured to send a closing signal to the check valve 4 when the pressure-limiting valve 5 opens. Any time lag between opening of the pressure-limiting valve 5 and closing of the check valve 4 is then further reduced to ensure that the two events occur simultaneously. In addition, the pressure-limiting valve 5 may be configured to send a signal or provide an indication to the pump or operator upon opening such that the pumping is halted automatically to minimize overflow and waste of fluid when the check valve 4 is closed.

## Claims

1. A torque-limiting safety coupling (1) comprising a circumferential expandable chamber adapted to receive a pressurised fluid and comprising a fluid pressurisation device for filling and pressurisation of fluid in an enclosed space (2) at a predetermined pressure, wherein the circumferential expandable chamber constitutes the enclosed space (2) and the pressurisation device comprises:
a pump connection seat (3) arranged in fluid communication with the enclosed space (2) and adapted to removably receive a nozzle of a fluid pump therein;
a unidirectional check valve (4) arranged between the pump connection seat (3) and the enclosed space (2) and configured to allow flow of fluid from the pump connection seat (3) to the enclosed space (2);and
a pressure-limiting valve (5) having an inlet arranged in fluid communication with the pump connection seat (3) and configured to open at the predetermined pressure and to drain fluid from the pump connection seat through the pressure limiting valve and at the same time the pressure applied to the check valve (4) decreases due to the draining off of the fluid though the pressure limiting valve (5), whereby the unidirectional check valve (4) immediately closes to enclose the fluid in the enclosed space (2) at the predetermined pressure;
wherein the torque-limiting safety coupling further comprises a channel having a first end and second end, the first end being connected to the pump connection seat (3) and the second end being connected to the inlet of the pressure-limiting valve (5).

2. The torque-limiting safety coupling according to claim 1, wherein the pump connection seat (3), the check valve (4) and the pressure-limiting valve (5) are arranged in and form part of an apparatus containing the enclosed space (2).

3. The torque-limiting safety coupling according to any preceding claim, wherein the pressure-limiting valve (5) is connected with the check valve (4) and configured to send a closing signal to the check valve (4) when the pressure-limiting valve (5) is opened.

4. The torque-limiting safety coupling according to any preceding claim, wherein the pressure-limiting valve (5) comprises a housing and a coil spring mounted on an adjustment screw for adjusting the predetermined pressure.

5. The torque-limiting safety coupling according to any preceding claim, wherein the pump connection seat (3) comprises attachment means for releasably securing a nozzle of the fluid pump therein.

6. The torque-limiting safety coupling (1) according to claim 1, wherein the predetermined pressure corresponds to a predetermined torque threshold value at which a safety mechanism for evacuating the expandable chamber is activated to release the safety coupling (1).

## Patentansprüche

1. Drehmomentbegrenzende Sicherheitskupplung (1), die eine umlaufende erweiterbare Kammer, die geeignet ist, eine mit Druck beaufschlagte Flüssigkeit aufzunehmen, umfasst und eine Flüssigkeitsdruckbeaufschlagungsvorrichtung, um eine Flüssigkeit bei einem vorgegebenen Druck in einen abgeschlossenen Raum (2) zu füllen und mit Druck zu beaufschlagen, umfasst, wobei die umlaufende erweiterbare Kammer den abgeschlossenen Raum (2) darstellt und die Druckbeaufschlagungsvorrichtung Folgendes umfasst:
einen Pumpenverbindungssitz (3), der in fluidischer Verbindung mit dem abgeschlossenen Raum (2) angeordnet und geeignet ist, eine Düse einer Flüssigkeitspumpe in demselben auf lösbare Weise aufzunehmen,
ein unidirektionales Rückschlagventil (4), das zwischen dem Pumpenverbindungssitz (3) und dem abgeschlossenen Raum (2) angeordnet und dazu ausgelegt ist, einen Flüssigkeitsstrom von dem Pumpenverbindungssitz (3) zu dem abgeschlossenen Raum (2) zu ermöglichen, und
ein Druckbegrenzungsventil (5), das einen Einlass aufweist, der in fluidischer Verbindung mit dem Pumpenverbindungssitz (3) angeordnet und dazu ausgelegt ist, sich bei dem vorgegebenen Druck zu öffnen und durch das Druckbegrenzungsventil Flüssigkeit aus dem Pumpenverbindungssitz abzulassen, wobei der auf das Rückschlagventil (4) ausgeübte Druck auf Grund des Ablassens der Flüssigkeit durch das Druckbegrenzungsventil (5) gleichzeitig abnimmt, wodurch sich das unidirektionale Rückschlagventil (4) unverzüglich schließt, um die Flüssigkeit in dem abgeschlossenen Raum (2) bei dem vorgegebenen Druck einzuschließen,
wobei die drehmomentbegrenzende Sicherheitskupplung ferner einen Kanal umfasst, der ein erstes Ende und ein zweites Ende aufweist, wobei das erste Ende mit dem Pumpenverbindungssitz (3) verbunden ist und das zweite Ende mit dem Einlass des Druckbegrenzungsventils (5) verbunden ist.

2. Drehmomentbegrenzende Sicherheitskupplung nach Anspruch 1, wobei der Pumpenverbindungssitz (3), das Rückschlagventil (4) und das Druckbegrenzungsventil (5) in einer den abgeschlossenen Raum (2) enthaltenden Vorrichtung angeordnet sind und einen Teil derselben bilden.

3. Drehmomentbegrenzende Sicherheitskupplung nach einem der vorhergehenden Ansprüche, wobei das Druckbegrenzungsventil (5) mit dem Rückschlagventil (4) verbunden und dazu ausgelegt ist, ein Schließsignal an das Rückschlagventil (4) zu senden, wenn sich das Druckbegrenzungsventil (5) öffnet.

4. Drehmomentbegrenzende Sicherheitskupplung nach einem der vorhergehenden Ansprüche, wobei das Druckbegrenzungsventil (5) ein Gehäuse und eine Spiralfeder umfasst, die an einer Einstellschraube befestigt ist, um den vorgegebenen Druck einzustellen.

5. Drehmomentbegrenzende Sicherheitskupplung nach einem der vorhergehenden Ansprüche, wobei der Pumpenverbindungssitz (3) Anbringungsmittel umfasst, um eine Düse der Flüssigkeitspumpe in demselben lösbar zu befestigen.

6. Drehmomentbegrenzende Sicherheitskupplung (1) nach Anspruch 1, wobei der vorgegebene Druck einem vorgegebenen Drehmomentschwellenwert entspricht, bei dem ein Sicherheitsmechanismus zum Entleeren der erweiterbaren Kammer aktiviert wird, um die Sicherheitskupplung (1) auszulösen.

## Revendications

1. Raccord de sécurité de limitation de couple (1) comprenant une chambre expansible circonférentielle adaptée pour recevoir un fluide sous pression et comprenant un dispositif de pressurisation de fluide pour remplir et pressuriser un fluide dans un espace clos (2) à une pression prédéfinie, la chambre expansible circonférentielle constituant l'espace clos (2) et le dispositif de pressurisation comprenant:
un siège de raccordement de pompe (3) agencé en communication fluidique avec l'espace clos (2) et conçu pour y recevoir de manière amovible une buse d'une pompe à fluide;
un clapet de retenue unidirectionnel (4) agencé entre le siège de raccordement de pompe (3) et l'espace clos (2) et conçu pour permettre un écoulement de fluide depuis le siège de raccordement de pompe (3) vers l'espace clos (2); et
un clapet de limitation de pression (5) ayant une entrée agencée en communication fluidique avec le siège de raccordement de pompe (3) et conçue pour s'ouvrir à la pression prédéfinie et pour évacuer le fluide du siège de raccordement de pompe à travers le clapet de limitation de pression et en même temps, la pression appliquée au clapet de retenue (4) diminue grâce à l'évacuation du fluide à travers le clapet de limitation de pression (5),
le clapet de retenue unidirectionnel (4) se fermant ainsi immédiatement pour enfermer le fluide dans l'espace clos (2) à la pression prédéfinie;
le raccord de sécurité de limitation de couple comprenant en outre un canal ayant une première extrémité et une seconde extrémité, la première extrémité étant connectée au siège de raccordement de pompe (3) et la seconde extrémité étant connectée à l'entrée du clapet de limitation de pression (5).

2. Raccord de sécurité de limitation de couple selon la revendication 1, dans lequel le siège de raccordement de pompe (3), le clapet de retenue (4) et le clapet de limitation de pression (5) sont disposés dans un dispositif contenant l'espace clos (2) et en font partie.

3. Raccord de sécurité de limitation de couple selon l'une quelconque des revendications précédentes, dans lequel le clapet de limitation de pression (5) est relié au clapet de retenue (4) et conçu pour envoyer un signal de fermeture au clapet de retenue (4) lorsque le clapet de limitation de pression (5) est ouvert.

4. Raccord de sécurité de limitation de couple selon l'une quelconque des revendications précédentes, dans lequel le clapet de limitation de pression (5) comprend un boîtier et un ressort hélicoïdal monté sur une vis de réglage pour régler la pression prédéfinie.

5. Raccord de sécurité de limitation de couple selon l'une quelconque des revendications précédentes, dans lequel le siège de raccordement de pompe (3) comprend des moyens de fixation pour y fixer de manière amovible une buse de la pompe à fluide.

6. Raccord de sécurité de limitation de couple (1) selon la revendication 1, dans lequel la pression prédéfinie correspond à une valeur seuil de couple prédéfinie à laquelle un mécanisme de sécurité destiné à évacuer la chambre expansible est activé pour libérer le raccord de sécurité (1).
